# EUROPEAN PATENT APPLICATION

(11) **EP 4 354 215 A1**
(43) Date of publication of application: **17.04.2024**
(21) Application number: 22382979.7
(22) Date of filing: 14.10.2022
(51) Int. Cl.: G02F 1/1343, E06B 3/67, G02F 1/1334, G02F 1/133, E06B 9/24

(54) **SMART FILM FOR A DISPLAY**

(71) Applicant: Dream Glass S. L., 28860 Paracuellos De Jarama (ES)
(72) Inventor: MESHKAT MAMALEK, Mojtaba, 28860 Paracuellos De Jarama (ES); FEIXAS, Enric, 08912 Badalona (ES); VILLAR, José Manuel, 28860 Paracuellos De Jarama (ES)
(74) Representative: TRBL Intellectual Property

(57) **Abstract**

The invention provides an optical arrangement comprising a first transparent conductive electrode (1), a second transparent conductive electrode (2) and an active optic material (3) arranged between the first and the second transparent conductive electrodes (1, 2) in electric contact with the first and the second transparent conductive electrodes (1, 2). The active optic material (3) is configured to change at least one optical property when subject to an electrical voltage. The first transparent conductive electrode (1) and the second transparent conductive electrode (2) are divided into sections (11-19, 21-23), each section being electrically isolated with respect to the rest of the sections The optical arrangement further comprises a control unit (6) configured to provide an electric signal to each of the first sections (11-15) and to each of the second sections (21-23), wherein the control unit (6) is configured to provide at least a first scenario where all the second sections receive the same electric signal and at least two first sections receive different electric signals and a second scenario wherein all the first sections receive the same electric signal and at least two second sections receive different electric signals.

## Description

### TECHNICAL FIELD

This invention belongs to the field of smart film and smart glaze comprising an electrically modifiable element embedded between two conductive substrates.

### STATE OF THE ART

Smart film and glaze systems are usually employed in producing immediate privacy and or images of attractions applied in partitioning and windows of showrooms, exhibitions, hotels, automotive industries with further applications as the barrier of UV and IR rays to save energy and bring comfort to the applied spaces.

As a specific example of switchable smart film and glaze, the polymer-dispersed liquid crystals (PDLC) herewith studied. The device can convert transparent sections of substrate to opaque and vice-versa by controlling each section independently or converting the sections to semi-opaque depending on the states of the liquid crystals.

The present invention uses this technology, but provides an advantageous system which improves the use and final result of the device.

### DESCRIPTION OF THE INVENTION

The invention provides an alternative solution for PDLC screens by means of a device according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides an optical arrangement comprising a first transparent conductive electrode, a second transparent conductive electrode and an active optic material arranged between the first and the second transparent conductive electrodes in electric contact with the first and the second transparent conductive electrodes,
wherein the active optic material is configured to change at least one optical property when subject to an electrical voltage;
wherein the first transparent conductive electrode is divided into first sections, each first section being electrically isolated with respect to the rest of the first sections,
wherein the second transparent conductive electrode is divided into second sections, each second section being electrically isolated with respect to the rest of the second sections,
wherein the optical arrangement further comprises a control unit configured to provide an electric signal to each of the first sections and to each of the second sections, wherein the control unit is configured to provide at least a first scenario where all the second sections receive the same electric signal and at least two first sections receive different electric signals and a second scenario wherein all the first sections receive the same electric signal and at least two second sections receive different electric signals.

The active optical material is a material that is configured to change at least one optical property (e.g., transparency to a particular range of light wavelength) when a voltage is applied between two sides of the same. There are many different types of active optical materials.

Due to this structure, the same optical arrangement may work in two different scenarios. In the first scenario, all the second sections work as a single electrode, since all of them are being fed with the same electric signal. The first sections will be fed with different signals (it is not necessary that every first section has its own different signal, second sections may be grouped) and the relation between the signal of each particular first section and the common signal of the second sections will define the transparency level of each first section.

The second scenario has the same principle but replacing the first sections by the second sections, and vice-versa.

Hence, the same optical system is configured to provide two completely different patterns depending on the selected scenario.

In some particular embodiments, the control unit comprises a first element configured to receive a sinusoidal alternate current and transform it to a direct current signal and comprises a second element configured to transform the direct current signal to an alternate square wave, and comprises a third element configured to create phase-shifted signals from the square wave and to feed the first and second sections with the phase-shifted signals.

The control unit uses a common power supply to create a plurality of phase-shifted square waves. These square waves are easy to compare. Since the optical properties of the active optical element depend on the voltage between two sides, comparing two square waves is advantageous to define the operation of each portion of the optical arrangement.

In some particular embodiments, the active optical material has a thickness comprised between 5 and 100 micrometres.

A lower thickness would not be enough for the present application.

In some particular embodiments, the first transparent conductive electrode and/or the second transparent conductive electrode comprises Indium Tin Oxide, silver nanowires, carbon nanotubes, graphene, transparent conductive polymers or nanometals.

These examples correspond to materials which provide a good compromise between transparency and electric conductivity.

In some particular embodiments, the first transparent conductive electrode is deposited on a first transparent substrate and/or the second transparent conductive electrode is deposited on a second transparent substrate.

The present invention may be applied on many different types of substrates. In some particular embodiments, the first transparent substrate and/or the second transparent substrate comprises a glass. In different particular embodiments, the first transparent substrate and/or the second transparent substrate comprises a plastic film, such a film made of polyethylene terephthalate.

In some particular embodiments, first transparent substrate and/or the second transparent substrate comprises an IR coating.

This is advantageous to block IR radiation.

In some particular embodiments, the active optical material comprises a Polymer-Dispersed Liquid Crystal.

This material can work with a wide range of voltage values, and provide good properties of transparency and opacity.

In some particular embodiments, the active optical material comprises a black Polymer Dispersed Liquid Crystal.

This material further provides IR protection.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a schematic view of a first embodiment of a film arrangement according to the invention.
Figure 2 shows a perspective view of such a film arrangement.
Figure 3 shows a different perspective view of such a film arrangement.
Figures 4 and 5 show different scenarios of operation of this film arrangement.

In these figures, the following reference numbers have been used:
- 1: First transparent electrode
- 2: Second transparent electrode
- 3: Active optic material
- 4: PET sheet
- 5: PET sheet
- 6: Control unit
- 11-19: First sections
- 21-23: Second sections

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

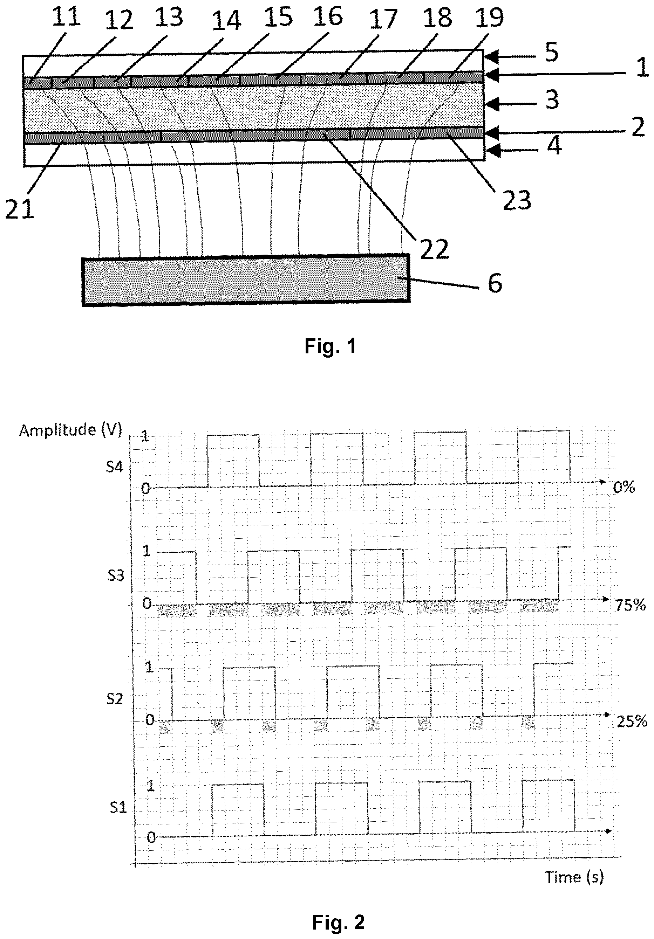

Figure 1 shows a schematic view of a first embodiment of a film arrangement according to the invention.

In this schematic view, the film arrangement comprises a first transparent electrode 1, a second transparent electrode 2 and an active optic material 3 arranged between the first 1 and the second 2 transparent electrodes. The active optic material 3 is in direct contact with the first 1 and the second 2 transparent electrodes.

The optical properties of this active optic material are defined by the voltage received by the same. When this received voltage overcomes a predefined threshold, the transparency of this material changes.

In some cases, the material is opaque when no voltage is applied and then changes from opaque to transparent when a voltage is applied between the two sides. In other cases, (called "reverse mode cases"), the material is transparent when no voltage is applied and then changes from transparent to opaque when a voltage is applied between the two sides.

In this particular embodiment, the active optic material 3 is a Polymer-Dispersed Liquid Crystal (PDLC), although in other embodiments also belonging to the invention, different materials may be used. Also, the transparent electrodes are Indium Tin Oxide (ITO), although in other cases, other types of transparent electrodes (such as silver nanowires, AgNW) may be used.

Each transparent electrode is deposited on a PET sheet 4, 5. Hence, the structure may be installed in a partition panel of an office, to cite some examples. In other embodiments, however, these electrodes may be installed in other substrates, such as glass panes, so that the structure may be installed in a house (either in a door or in a window).

In this figure, it is also seen how the first transparent electrode 1 is divided into first sections 11-19. Although nine first sections have been illustrated in this figure, this is just a generic example. These element sections are obtained by etching, which is usually done by laser cut. The final result is that each first section is electrically independent, although there may be additional connections between some of them, to create section groups.

In turn, the second transparent electrode 2 is also divided into second sections 21-23. These sections are obtained by etching, which is usually done by laser cut. The final result is that each second section is electrically independent, although there may be additional connections between some of them, to create section groups. Once again, although only three second sections are illustrated, any number of them may be performed in different embodiments.

Electric signal is provided to each section by a control unit 6, which receives a standard AC voltage, transforming it into a DC voltage and then to an alternative square-wave with or without phase-shift.

This figure is simple on purpose, for the sake of understanding the invention since, in a real product, as will be shown below, there may be dozens of different sections.

Figure 2 shows an example of a first scenario of use of this optic arrangement.

In this first scenario, all the second segments are fed by the same signal S1, so they work as a single electrode.

Different groups of first segments are fed by different phase-shifted signals. For example, a first group of first segments is fed with a second signal S2, which is shifted 45° with respect to the first signal S1 feeding the second segments.

As a consequence, the corresponding sections are only activated during 25% the period of the wave (where the waves S1 and S2 provide different values, and therefore, there is a 25% transparency value in the corresponding section).

A second group of first segments is fed with a third signal S3, which is shifted 135° with respect to the first signal S1 feeding the second segments.

As a consequence, the corresponding sections are only activated during 75% of the period of the wave (where the waves S1 and S3 provide different values, and therefore, there is a 75% transparency value in the corresponding section).

Finally, a third group of first segments is fed with a third signal S4, which is shifted 0° with respect to the first signal S1 feeding the second segments.

As a consequence, the corresponding sections are never activated during the period of the wave (waves S1 and S4 never provide different values, and therefore, there is a 0-voltage value in the corresponding section).

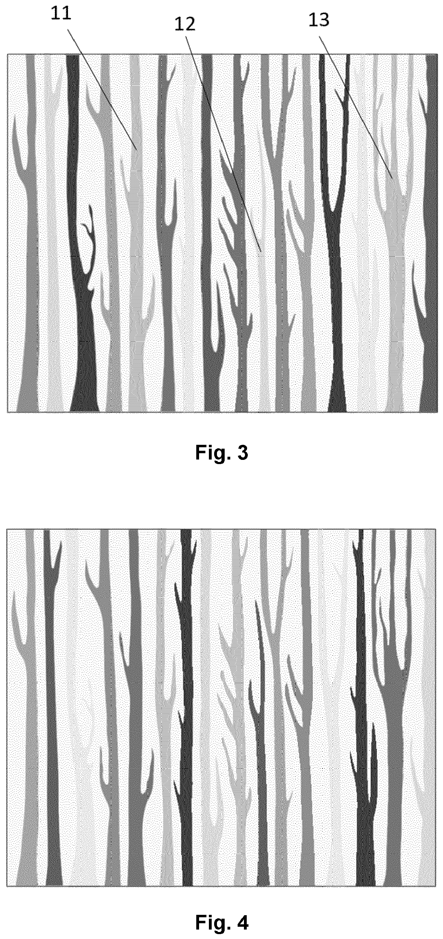

Figures 3 and 4 show an example of this operation by seeing different embodiments of this first scenario.

As may be seen in these figures, the first sections have been delimited as tree trunks silhouettes. In this figure, there are nine different groups, although in different examples, any number of groups is possible.

In this first scenario, all the segments of the second transparent electrode are provided with the same electric signal, so they work as a single electrode. Hence, the pattern that will be seen will be defined by the different signals which are provided to each of the first sections. Some trees would be fed by signal S2, some of them by signal S3 and some of them by signal S4, according to the previous figure. More signals would be available for the rest of trees, but these three signals are enough to illustrate the invention.

Hence, each tree would have a different transparency level (tree fed with S2 would have a 25% transparency, tree fed with S3 would have a 75% transparency and tree fed with S4 would be opaque).

Figure 4 shows the same embodiment but changing the signals provided to each group (for example, those trees which received signal S2 in figure 2 are now receiving S3, and so on).

Hence, by a dynamic control, a patterned change of the transparency (shades) of each group of trees may be gradually produced in thousands of different combinations. By playing with these differences, different levels may be achieved by moving the backward trees to the front and the front to the back and vice-versa, thus creating a dynamic art scenery. This effect could be continued or stopped at users' will through an App installed on a mobile phone or a tablet of the user.

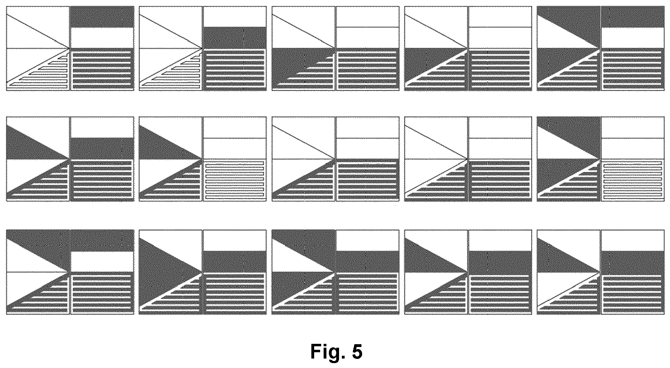

Figure 5 shows the same optic arrangement, but in a second scenario. Here, all the first sections are fed with the same common electric signal, and the second sections are fed with different signals. Now, the pattern is defined by the second sections, which are completely different from the first sections. In this figure, it can be seen the many different effects that can be achieved with this arrangement.

The outstanding advantage of this arrangement is that, since the two conductive elements are transparent, these different effects are seen in the same glass from each of the two sides: the same glass seen from the same side may offer a circles-pattern or a trees-pattern. Needless to say, these two patterns may be as complex as needed by the designs, the example shown in these figures is intentionally simple, for the sake of clarity and an easy understanding of the invention.

## Claims

1. Optical arrangement comprising a first transparent conductive electrode (1), a second transparent conductive electrode (2) and an active optic material (3) arranged between the first and the second transparent conductive electrodes (1, 2) in electric contact with the first and the second transparent conductive electrodes (1, 2),
wherein the active optic material (3) is configured to change at least one optical property when subject to an electrical voltage;
wherein the first transparent conductive electrode (1) is divided into first sections (11-15), each first section being electrically isolated with respect to the rest of the first sections (11-15);
wherein the second transparent conductive electrode (2) is divided into second sections (21, 22, 23), each second section being electrically isolated with respect to the rest of the second sections (21, 22, 23);
wherein the optical arrangement further comprises a control unit (6) configured to provide an electric signal to each of the first sections (11-15) and to each of the second sections (21-23), wherein the control unit (6) is configured to provide at least a first scenario where all the second sections receive the same electric signal and at least two first sections receive different electric signals and a second scenario wherein all the first sections receive the same electric signal and at least two second sections receive different electric signals.

2. Optical arrangement according to claim 1, wherein the control unit (6) comprises a first element configured to receive a sinusoidal alternate current and transform it to a direct current signal and comprises a second element configured to transform the direct current signal to an alternate square wave, and comprises a third element configured to create phase-shifted signals from the square wave and to feed the first and second sections with the phase-shifted signals.

3. Optical arrangement according to any of the preceding claims, wherein the active optical material (3) has a thickness comprised between 5 and 100 micro-meters.

4. Optical arrangement according to any of the preceding claims, wherein the first transparent conductive electrode (1) and/or the second transparent conductive electrode (2) comprises Indium Tin Oxide, silver nanowires, carbon nanotubes, graphene, transparent conductive polymers or nanometals.

5. Optical arrangement according to any of the preceding claims, wherein the first transparent conductive electrode (1) is deposited on a first transparent substrate (4) and/or the second transparent conductive electrode (2) is deposited on a second transparent substrate (5).

6. Optical arrangement according to claim 5, wherein the first transparent substrate (4) and/or the second transparent substrate (5) comprises a glass.

7. Optical arrangement according to claim 5, wherein the first transparent substrate (4) and/or the second transparent substrate (5) comprises a plastic film, such a film made of polyethylene terephthalate.

8. Optical arrangement according to any of claims 5 to 7, wherein the first transparent substrate (4) and/or the second transparent substrate (5) comprises an IR coating.

9. Optical arrangement according to any of the preceding claims, wherein the active optical material (3) comprises a Polymer-Dispersed Liquid Crystal.

10. Optical arrangement according to any of claims 1 to 7, wherein the active optical material (3) comprises a black Polymer Dispersed Liquid Crystal.
